# EUROPÄISCHE PATENTSCHRIFT

(11) **EP 0 574 669 B1**
(45) Veröffentlichungstag und Bekanntmachung des Hinweises auf die Patenterteilung: **20.03.1996**
(21) Anmeldenummer: 93106340.8
(22) Anmeldetag: 20.04.1993
(51) Int. Cl.: F16B 13/06

(54) **Spreizanker**
Expansion anchor
Dispositif d'ancrage à expansion

(30) Priorität: 19.06.1992 DE 4219984
(43) Veröffentlichungstag der Anmeldung: 22.12.1993
(73) Patentinhaber: fischerwerke Artur Fischer GmbH & Co. KG, D-72178 Waldachtal (DE)
(72) Erfinder: Weber, Wilfried, W-7294 Schopfloch-Unteriflingen (DE)

(56) Entgegenhaltungen:
- EP-A- 0 514 342
- DE-A- 3 031 048
- DE-A- 3 620 573
- FR-A- 2 141 154
- FR-A- 2 349 759
- GB-A- 1 414 562
- US-A- 2 667 099

## Beschreibung

Die Erfindung betrifft einen Spreizanker zur Verankerung in einem Bohrloch eines Bauteiles gemäß der Gattung des Anspruches 1.

Ein gattungsgemäßer Spreizanker ist aus der FR-A-2141 154 bekannt. Derartige Spreizanker sind insbesondere für den Einsatz in harten Baustoffen geeignet, wobei durch Aufdrehen einer Mutter auf den das Bauteil und den zu befestigenden Gegenstand überragenden Gewindeschaft der am Schaft angeformte Spreizkonus in die an der Bohrlochwandung sich abstützende Spreizhülse eingezogen wird. Die Spreizhülse weitet sich dabei auf und verkeilt sich im Bohrloch. Die Abstützung der Spreizhülse im Bohrloch wird durch an ihr angeordnete Sperrelemente erreicht, die sich an der Bohrlochwandung verhaken.

Die Aufweitung der Spreizhülse wird üblicherweise durch mehrere Längsschlitze ermöglicht. Durch die Längsschlitze werden Spreizschenkel ausgebildet, die am Ende der Längsschlitze in die geschlossene Hülsenform übergehen. Zum Aufspreizen der Spreizschenkel ist es daher erforderlich, die Schenkel über die Verbindungslinie der Enden der beiden den Schenkel begrenzenden Längsschlitze aufzubiegen. Hierzu ist eine erhebliche Spreizkraft erforderlich, die zum einen von der Wandungsdicke der Spreizhülse und zum anderen von der Breite der Schenkel und damit deren Schalenform abhängt. Um mit dem Spreizanker ausreichende Haltekräfte zu erzielen, ist jedoch eine gewisse Breite der Spreizschenkel erforderlich.

Durch entsprechend angepaßte Konuswinkel ist es möglich, mit einem noch vertretbaren Drehmoment den Spreizkonus in die Spreizhülse einzuziehen und dabei die Spreizschenkel zur Verankerung der Spreizhülse aufzuweiten. Der Aufweitwiderstand der Spreizschenkel ist jedoch zu hoch, um ein Nachrutschen des Spreizkonusses bei einer Bohrlocherweiterung durch Rißbildung zu ermöglichen. Durch das fehlende Nachspreizvermögen sind die bekannten Spreizanker nicht für einen Einsatz in der Zugzone geeignet, in der durch auftretende Zugspannungen im Beton sich Risse bilden können. Tritt eine Bohrlocherweiterung durch Rißbildung auf, kann die Spreizhülse der bekannten Spreizanker diese Erweiterung nicht ausgleichen, so daß der Anker schon bei einer geringen Last aus dem Bohrloch ausziehbar ist.

Aus der FR-A-2349759 ist ein Spreizanker bekannt, der aus einer Befestigungsschraube, einem mit einem Innengewinde versehenen Spreizkonus und einer Spreizhülse besteht. Zur Verankerung wird die Befestigungsschraube in den Spreizkonus eingedreht und dieser gleichzeitig auf dem Gewindeabschnitt der Befestigungsschraube axial in Richtung Bohrlochmündung verschoben. Dabei wird die auf dem Gewindeabschnitt der Befestigungsschraube angeordnete Spreizhülse vom Spreizkonus aufgeweitet und im Bohrloch verankert. Die Aufspreizung der Spreizhülse durch den Spreizkonus wird durch Längsschlitze ermöglicht, die über einen Teil der Länge der Spreizhülse verlaufen. An ihrem Spreizkonus abgewandten Ende weist die Spreizhülse ebenfalls Einschlitzungen auf, die eine Aufspreizung auch an diesem Ende der Spreizhülse ermöglichen. Die Aufspreizung erfolgt durch eine konusähnliche Fase an der den Gewindeabschnitt begrenzenden Anschlagschulter der Befestigungsschraube. Beim Eindrehen der Befestigungsschraube in den Spreizkonus dringt die konusartige Fase der Befestigungsschraube in das dem Spreizkonus abgewandte Ende der Spreizhülse ein und weitet die Spreizhülse an dieser Stelle radial nach außen auf. Diese zusätzliche Verkeilung der Spreizhülse auf der Befestigungsschraube behindert jedoch das Nachspreizen des Spreizankers bei einer Bohrlocherweiterung durch Rißbildung. Damit ist auch dieser Anker für eine sichere Befestigung in der Zugzone eines Betonteils nicht geeignet.

Der Erfindung liegt die Aufgabe zugrunde, einen Spreizanker zu schaffen, welcher durch leichtes Aufklappen der Spreizhülse bei einer Bohrlocherweiterung durch Rißbildung nachrutschen kann und somit eine sichere Befestigung in der Zugzone eines Betonteils gewährleistet.

Die Lösung dieser Aufgabe wird durch die im Anspruch 1 angegebenen Merkmale erreicht. Durch die von der vorderen Stirnkante ausgehenden und sich mindestens über die Hälfte der Länge der Spreizhülse erstreckenden Längsschlitze werden Spreizschenkel gebildet, die durch Einziehen des am Schaft angeformten Spreizkonusses aufweitbar sind. Am Ende der Längsschlitze befinden sich erweiterte Durchbrechungen der Hülsenwandung, die vorzugsweise als kreisförmige Ausstanzungen ausgebildet sind. Durch diese Ausstanzungen wird einerseits vermieden, daß die Spreizhülse bei ihrem Aufspreizen in Fortsetzung der Längsschlitze aufreißt, und andererseits die Gelenkbildung für das Aufbiegen der Spreizschenkel begünstigt. Mit den von der hinteren Stirnkante ausgehenden und mit den Längsschlitzen fluchtenden Einschnitten wird erreicht, daß die Gelenke für das Aufklappen der Spreizschenkel von den zwischen den Einschnitten und den Ausstanzungen verbleibenden Stegen gebildet wird. Durch die kerbartigen, dreiecksförmigen Einschnitte wird der hintere Hülsenrand der Spreizhülse perforiert, so daß beim Aufklappen der Spreizschenkel ein Einbiegen des hinteren Hülsen randes in Form einer Hebelbewegung möglich ist. Dadurch wird der Widerstand für die Aufweitung der Spreizschenkel derart reduziert, daß schon geringste Zugkräfte am Schaft eine Aufweitung der Spreizhülse und damit Nachrutschen des Spreizkonusses ermöglichen. Bei einer Verankerung des Spreizankers in der Zugzone eines Betonteiles und beim Auftreten eines Risses und der damit verbundenen Bohrlocherweiterung reicht die am Spreizanker angreifende Gebrauchslast aus, um durch Nachrutschen des Spreizkonusses in die Spreizhülse die Spreizschenkel zum Ausgleich der Bohrlocherweiterung weiter aufzubiegen und den Spreizanker erneut im Bohrloch zu verankern. Aufgrund der erleichterten Aufweitbarkeit der Spreizhülse ergibt sich somit die Eignung des erfindungsgemäßen Spreizankers für die Zugzone.

Besonders günstige Hebelverhältnisse ergeben sich bei einer Länge der Stege, die etwa der Wandungsstärke der Spreizhülse entspricht.

Um ein sicheres Festsetzen der Spreizhülse zum Aufspreizen und insbesondere auch beim Auftreten einer Bohrlocherweiterung zu erreichen, ist es vorteilhaft, die Spreizhülse an ihrem hinteren Ende mit pfeilartigen Ausprägungen und an ihrem vorderen Ende mit Federzungen als Sperrelemente auszustatten. Die gegen die Zugrichtung aufgestellten Sperrelemente verhaken sich an der Bohrlochwandung und verhindern damit eine Verschiebung der Spreizhülse.

Zur Verbesserung des Reibverhaltens zwischen dem Spreizkonus und der Spreizhülse kann die vordere Innenkante der Spreizhülse eine Fase aufweisen. Ferner können zum gleichen Zweck die vorderen Eckkanten der Spreizschenkel der Spreizhülse mit einer Abrundung versehen sein. Durch die Verringerung der Reibung wird auch das Nachrutschen des Spreizkonusses in die Spreizhülse bei einer Bohrlocherweiterung erleichtert.

Die Erfindung wird nachfolgend anhand der Zeichnung näher erläutert.

Es zeigen:
- Figur 1: den erfindungsgemäßen Spreizanker mit aufgesetzter Spreizhülse (gemäß Schnitt B-B),
- Figur 2: den Schnitt A-A des in Figur 1 dargestellten Spreizankers,
- Figur 3: den in einem Bohrloch eines Betonteiles verankerten Spreizanker und
- Figur 4: die Abwicklung der Spreizhülse als Stanz-/Biegeteil.

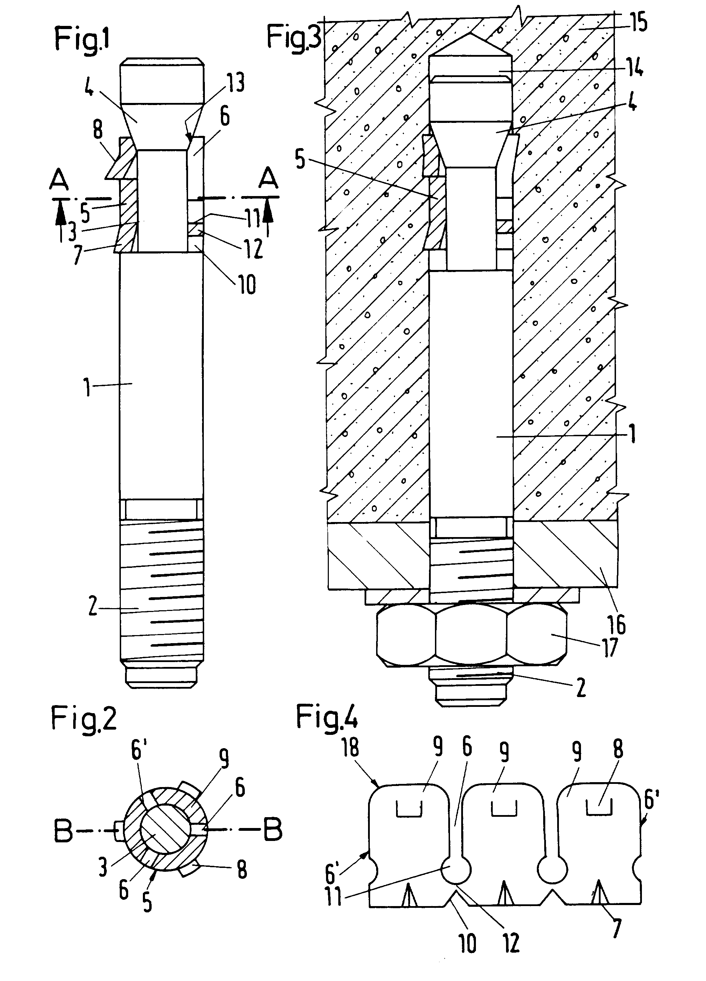

Der in Figur 1 dargestellte Spreizanker besteht aus einem Schaft 1, der an seinem hinteren Ende einen Gewindeabschnitt 2 zum Festspannen eines Gegenstandes aufweist. Im vorderen Bereich des Schaftes 1 befindet sich ein abgesetzter Abschnitt 3, an den sich zum vorderen Ende hin ein Spreizkonus 4 anschließt. Im Bereich des Abschnitts 3 ist eine Spreizhülse 5 aufgesetzt, deren Spreizbereich durch von der vorderen Stirnkante der Hülse ausgehende Längsschlitze 6 gebildet wird. Zum Festsetzen der Spreizhülse im Bohrloch sind an der Spreizhülse 5 Sperrelemente angeordnet. Am hinteren Ende der Spreizhülse 5 sind die Sperrelemente als pfeilartige Ausprägungen 7 und am vorderen Ende als Federzungen 8 ausgebildet. Zum vorderen Ende hin sind die Sperrelemente abgeflacht, so daß sie sich beim Eintreiben des Spreizankers in das Bohrloch einbiegen lassen. Durch das Verhaken der aufgestellten Stirnkanten der Sperrelemente tritt in Auszugsrichtung des Spreizankers eine Sperrung ein.

In Figur 2 ist der Schnitt entsprechend der Schnittlinie A-A dargestellt. Durch die Längsschlitze 6,6' entstehen mehrere Spreizschenkel 9, die beim Einziehen des Spreizkonusses 4 in die Spreizhülse 5 zur Verankerung des Spreizankers aufspreizen. Das Aufklappen der Spreizschenkel 9 wird dadurch erleichtert, daß an der Spreizhülse von der hinteren Stirnkante ausgehend und mit den Längsschlitzen 6 fluchtend kerbartige Einschnitte 10 angeordnet sind. Diese vorzugsweise dreiecksförmig ausgebildeten Einschnitte 10 (siehe Figur 4) enden in einem Abstand zu der erweiterten Durchbrechung 11 so daß als Gelenk für die Spreizschenkel 9 ein Steg 12 stehen bleibt. Zur Verringerung der Reibung ist es ferner zweckmäßig, die Spreizhülse 5 mit einer Fase 13 zu versehen.

Figur 3 zeigt den Spreizanker, der in einem Bohrloch 14 eines Betonteiles 15 verankert ist. Die Verankerung und gleichzeitig die Verspannung des zu befestigenden Gegenstandes 16 erfolgt durch Aufdrehen der Mutter 17 auf den Gewindeabschnitt 2 des Spreizankers. Durch die axiale Verschiebung des Schaftes 1 des Spreizankers wird der Spreizkonus 4 in die durch die Sperrelemente unverrückbar im Bohrloch festsitzende Spreizhülse 5 zu deren Verankerung eingezogen.

Figur 4 zeigt die Abwicklung der aus einem Blech gestanzten Spreizhülse 5 mit drei Spreizschenkeln 9. Jeder Spreizschenkel ist mit zwei Sperrelementen versehen, wobei am vorderen Ende des Spreizschenkels die Federzunge 8 und am hinteren Ende die pfeilartige Ausprägung 7 angeordnet ist. Die Spreizschenkel 9 sind durch die Längsschlitze 6 bzw. die Rollkante 6' gebildet und durch die erweiterten Durchbrechungen 11 begrenzt. Ferner weist das Stanzteil auch bereits die Einschnitte 10 auf. Durch Aufbiegen des Stanzteiles auf den reduzierten Abschnitt 3 des Schaftes 1 wird der erfindungsgemäße Spreizanker gebildet. Zur Verringerung der Reibung zwischen Spreizkonus und Spreizhülse sind die Eckkanten der Spreizschenkel 9 mit Abrundungen 18 versehen.

## Patentansprüche

1. Spreizanker zur Verankerung in einem Bohrloch (14) eines Betonteiles (15), bestehend aus einem Schaft, der an seinem hinteren Ende Mittel zum Befestigen eines Gegenstandes und an seinem vorderen Ende einen im Querschnitt reduzierten Abschnitt (3) mit einem sich daran anschließenden Spreizkonus (4) aufweist, und einer über den Abschnitt gestülpten Spreizhülse (5) mit Längsschlitzen (6) und den Durchmesser der Spreizhülse überragenden Sperrelementen, wobei die Längsschlitze (6) von der vorderen Stirnkante ausgehend sich mindestens über die Hälfte der Länge der Spreizhülse (5) erstrecken und jeweils in einer erweiterten Durchbrechung (11) der Hülsenwandung münden, **dadurch gekennzeichnet,** daß die Spreizhülse (5) von der hinteren Stirnkante ausgehend und mit den Längsschlitzen (6) fluchtend kerbartige, dreiecksförmige Einschnitte (10) aufweist, die unter Bildung eines Steges (12) in einem Abstand zu den erweiterten Durchbrechungen (11) enden, wobei die Länge der Stege (12) etwa der Wandungsdicke der Spreizhülse (5) entspricht.

2. Spreizanker nach Anspruch 1, **dadurch gekennzeichnet,** daß die erweiterten Durchbrechungen (11) kreisförmige Ausstanzungen sind.

3. Spreizanker nach Anspruch 1, **dadurch gekennzeichnet,** daß die Spreizhülse (5) als Sperrelemente am hinteren Ende pfeilartige Ausprägungen (7) und am vorderen Ende Federzungen (8) aufweist, die zum vorderen Ende der Spreizhülse hin abgeflacht sind.

4. Spreizanker nach Anspruch 1, **dadurch gekennzeichnet,** daß die vordere Innenkante der Spreizhülse (5) eine Fase (13) aufweist.

5. Spreizanker nach Anspruch 1, **dadurch gekennzeichnet,** daß die vorderen Eckkanten der Spreizschenkel (9) der Spreizhülse mit einer Abrundung (18) versehen sind.

## Claims

1. An expansible anchor for anchoring in a drilled hole (14) of a concrete part.(15), comprising a shank, which at its rear end has means for fixing an article and at its front end has a portion (3) of reduced cross-section with an adjoining expander cone (4), and positioned over the portion an expansible sleeve (5) having longitudinal slits (6) and locking elements projecting beyond the diameter of the expansible sleeve, wherein, starting from the front end edge, the longitudinal slits (6) extend for at least half the length of the expansible sleeve (5) and continue as enlarged openings (11) in the wall of the sleeve, characterized in that, starting from the rear end edge and in alignment with the longitudinal slits (6), the expansible sleeve (5) has notch-like, triangular incisions (10), which terminate at a distance from the enlarged openings (11) to define a web (12), the length of the webs (12) corresponding approximately to the wall thickness of the expansible sleeve (5).

2. An expansible anchor according to claim 1, characterized in that the enlarged openings (11) are circular punched holes.

3. An expansible anchor according to claim 1, characterized in that as locking elements the expansible sleeve (5) has at its rear end arrow-like mouldings (7) and at its front end resilient tongues (8) which slope away towards the front end of the expansible sleeve.

4. An expansible anchor according to claim 1, characterized in that the front inner edge of the expansible sleeve (5) has a bevel (13).

5. An expansible anchor according to claim 1, characterized in that the front corner edges of the expansible arms (9) of the expansible sleeve are rounded (18).

## Revendications

1. Dispositif d'ancrage à expansion pour l'ancrage dans un trou perforé (14) d'un élément de béton (15), constitué d'une tige qui présente à son extrémité arrière des moyens pour fixer un objet et à son extrémité avant une portion (3) de section réduite avec un cône d'expansion (4) qui s'y raccorde, et d'une douille expansible (5) emboîtée par-dessus cette section et présentant des fentes longitudinales (6) et des éléments de verrouillage dépassant le diamètre de la douille expansible, les fentes longitudinales (6), partant du bord frontal avant s'étendant au moins sur la moitié de la longueur de la douille expansible (5) et débouchant chacune dans une découpure élargie (11) de la paroi de la douille, **caractérisé** par le fait que la douille expansible (5) présente des incisions triangulaires, en forme d'entaille, qui partent du bord frontal arrière. sont alignées avec les fentes longitudinales (6) et se terminent, en formant une barrette (12), à une certaine distance des découpures élargies (11), la longueur des barrettes (12 correspondant à peu près à l'épaisseur de paroi de la douille expansible (5).

2. Dispositif d'ancrage à expansion selon la revendication 1. caractérisé par le fait que les découpures élargies (11) sont des découpures circulaires obtenues par poinçonnage.

3. Dispositif d'ancrage à expansion selon la revendication 1, caractérisé par le fait que la douille expansible (5) présente, comme élément de verrouillage, à son extrémité arrière des emboutis (7) en forme de flèche et. à son extrémité avant, des languettes élastiques (8) qui sont en chanfrein en direction de l'extrémité avant de la douille expansible.

4. Dispositif d'ancrage à expansion selon la revendication 1, caractérisé par le fait que le bord intérieur avant de la douille expansible (5) présente un chanfrein (13).

5. Dispositif d'ancrage à expansion selon la revendication 1, caractérisé par le fait que les sommets avant des ailes expansibles (9) de la douille expansible présentent un arrondi (18).
